Europäisches Patentamt

European Patent Office

Office européen des brevets

(11) Veröffentlichungsnummer: **0 104 427**
**A2**

# (12) EUROPÄISCHE PATENTANMELDUNG

(21) Anmeldenummer: 83108270.6

(22) Anmeldetag: 23.08.83

(51) Int. Cl.³: **G 03 B 19/00**

(30) Priorität: 25.08.82 DE 3231539
08.12.82 DE 3245333

(43) Veröffentlichungstag der Anmeldung:
04.04.84 Patentblatt 84/14

(84) Benannte Vertragsstaaten:
AT CH FR GB IT LI NL SE

(71) Anmelder: SMA Schaut GmbH
Robert-Bosch-Strasse 2-4
D-6367 Karben 1(DE)

(72) Erfinder: Schaut, Josef
Freiher von Stein Strasse 8
D-6367 Karben 1(DE)

(72) Erfinder: Rüppel, Peter
Söderweg 39
D-6350 Bad Nauheim(DE)

(72) Erfinder: Hültner, Karl
Brunnenweg 5
D-6360 Friedberg(DE)

(74) Vertreter: Wolf, Günter, Dipl.Ing.
Patentanwälte Dipl.-Ing. Amthor Dipl.-Ing. Wolf Postfach
70 02 45 An der Mainbrücke 16
D-6450 Hanau 7(DE)

(54) Kamerakasten für Mikrofilmaufnahmekameras.

(57) Der Kamerakasten ist für Mikrofilmaufnahme-Kameras bestimmt. Er besteht aus einem Gehäuse mit darin in Durchlaufrichtung hintereinander angeordnetem Magazin, Belichtungs-, Entwicklungs- und Trocknungseinrichtung.

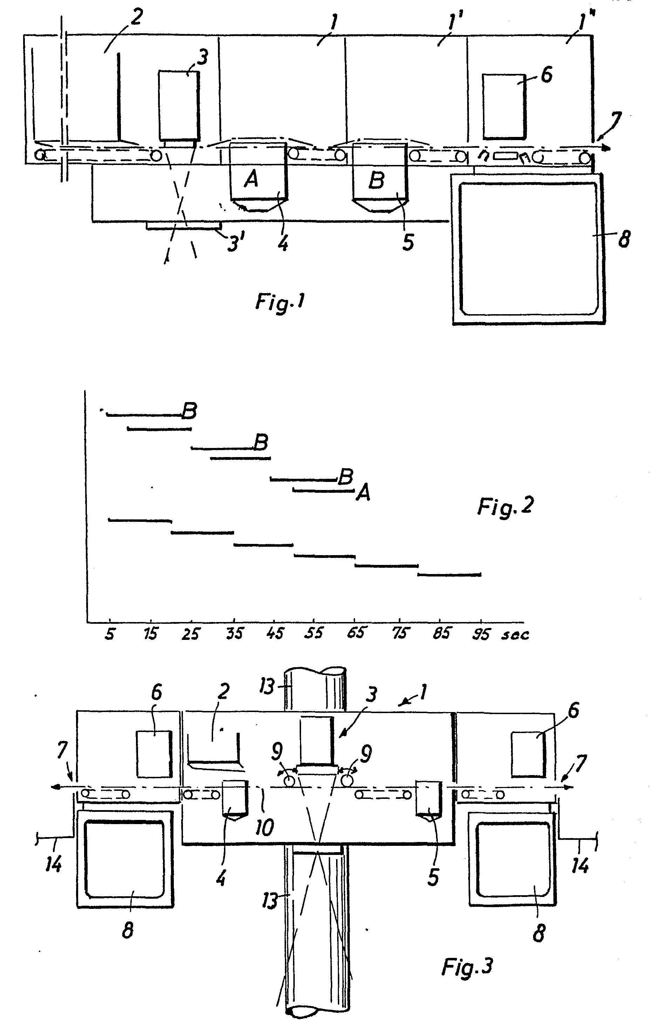

Um die Durchsatzgeschwindigkeit von Lochkarten durch einen solchen Kamerakasten erhöhen zu können, ist im Gehäuse (1) der nach der Belichtungsstation (3) angeordneten ersten Entwicklungsstation (4) eine weitere, in Größe und Wirkungsart entsprechende zweite Entwicklungsstation (5) vor der Trockenstation (6) zugeordnet (Fig. 1)

Bei einer anderen Ausführungsform ist im das Lochkartenmagazin enthaltenden Gehäuse der nach der Belichtungsstation angeordneten ersten Entwicklungseinrichtung eine weitere, in Größe und Wirkungszeit entsprechende zweite Entwicklungseinrichtung auf der anderen Seite der Belichtungsstation zugeordnet. Die Transportelemente sind hierbei im Bereich der Belichtungsstation, jeweils in entgegengesetzte Richtung wirkend, umsteuerbar ausgebildet.

Fig.1

Croydon Printing Company Ltd.

## Kamerakasten für Mikrofilmaufnahme-Kameras

Die Erfindung betrifft einen Kamerakasten für Mikrofilmaufnahme-Kameras gemäß Oberbegriff des Hauptanspruches.

Kamerakästen der genannten Art sind allgemein bekannt und als
wesentliches Teil an Mikrofilmaufnahme-Kameras in Benutzung.

Bei den darin mit eingebauten Entwicklungseinrichtungen
(sogenannte Entwicklungstöpfe) handelt es sich um solche,
in die die Lochkarte mit ihrem belichteten Filmabschnitt einläuft, darin durch Besprühen mit Entwicklerflüssigkeit entwickelt wird, diese mittels entsprechender Transportelemente verläßt und in eine Trocknungsstation gelangt, in deren Bereich
in der Regel auch Kontroll- und ggf. auch Projektionseinrichtungen angeordnet sind, um die erreichte Dichte der Mikroaufnahme kontrollieren zu können.

Dieser Entwicklungsvorgang benötigt eine bestimmte Zeitspanne,
die in der Größenordnung von 15 bis 18 sec. liegt, d.h., die ganze
Aufnahmegeschwindigkeit der Kamera ist wesentlich von dieser
Zeitspanne abhängig, und eine Unterschreitung dieser Gesamtaufnahmezeit bis zur Ausgabe der Karte aus dem Kamerakasten ist bis jetzt nicht möglich, d.h., bspw. sechs unmittelbar nacheinander erfolgende Aufnahmen benötigen ca. 9o bis 1o8 sec.,
da sich die Zeiten für die Einzelaufnahmen additiv aneinanderreihen müssen.

Da es aber wünschenswert ist, bei großen Durchsatzzahlen
die Durchsatzgeschwindigkeit zu erhöhen, liegt der Erfindung
die aufgabe zugrunde, mit möglichst einfachen Mitteln den
Kamerakasten so auszubilden, daß dies möglich wird.

Diese Aufgabe ist mit einem Kamerakasten der eingangs genannten
Art nach der Erfindung durch das im Kennzeichen des Patentanspruches 1 Erfaßte gelöst. Vorteilhafte Weiterbildungen dieser
Lösung ergeben sich nach den Unteransprüchen 2 bis 4.

Durch diese erfindungsgemäße Ausbildung des Kamerakastens ist es
möglich, die oben genannte Zeitspanne um einen beträchtlichen
Betrag von 9o sec. auf 6o sec. herunterzudrücken. Bevorzugt
wird dabei die Ausführungsform gemäß Anspruch 2 benutzt, da sich diese
am einfachsten verwirklichen läßt. Hierbei läuft eine belichtete
Lochkarte zunächst über die erste Entwicklungseinrichtung weg in die
nachfolgende, wo die Entwicklung sofort beginnt. Während dieser
Periode folgt aber schon das Anlegen der nächsten Vorlage und deren
Aufnahme, so daß bereits ca. 5 sec. nach Entwicklungsbeginn
der ersten Aufnahme die Entwicklung der zweiten Aufnahme beginnen kann, während der die zuerst beschickte Entwicklungseinrichtung wieder geräumt wird. Nach Abschluß der
Entwicklung in der der Belichtungsstation zunächst liegenden ersten Entwicklungseinrichtung kann sofort wieder
die in Durchlaufrichtung dahinter liegende zweite Entwicklungseinrichtung beschickt werden usw.

Eine geeignete Gestaltung des Transportweges ließe ggf.
sogar eine Nebeneinanderordnung der Entwicklungseinrichtungen zu
(weichenartige Ausbildung, Querversetzung im Bereich des Transportweges sind ebenfalls möglich), dies verlangt aber einen
größeren konstruktiven Aufwand, so daß der einfachsten Aus-.
führungsform der Vorzug gegeben wird, bei der also jeweils
die zunächstliegende Entwicklungseinrichtung einfach übersprungen wird.

Die den Transport der Lochkarten bewirkenden Elemente sind
natürlich so ausgebildet, angeordnet und antriebsmäßig gesteuert, daß sich der oben erläuterte Arbeitstakt durchführen
läßt.

Die gestellte Aufgabe ist aber auch noch auf andere Weise lösbar und zwar im Sinne des Anspruches 5 und folgende. Hierbei
läuft eine belichtete Lochkarte nach Passage der Belichtung
in die nachfolgende, erste Entwicklungseinrichtung, wo die

- 4 -

Entwicklung sofort beginnt. Während dieser Periode erfolgt
aber schon das Anlegen der nächsten Vorlage und damit die
Belichtung der nächsten Lochkarte, so daß unmittelbar nach
Entwicklungsbeginn der ersten Lochkarte auch die Entwicklung
der zweiten Lochkarte beginnen kann, die allerdings aus der
Belichtungsstation in entgegengesetzter Richtung in die andere,
vor der Belichtungsstation angeordnete zweite Entwicklungsstation
gefördert wird. Nach Abschluß der Entwicklung in der ersten
Entwicklungseinrichtung kann diese sofort wieder beschickt werden und ebenso die andere, sobald diese ebenfalls wieder frei
ist.

Die den Transport der Lochkarten bewirkenden Elemente sind natürlich
auch hierbei so ausgebildet, angeordnet und antriebsmäßig gesteuert, daß sich der oben erläuterte Arbeitstakt durchführen
läßt, d.h., die im Bereich der Belichtungsstation angeordneten
Transportelemente sind umsteuerbar ausgebildet, so daß der Lochkartentransport abwechselnd nach der einen und nach der anderen
Seite erfolgt.

Für die Anordnung des Lochkartenmagazins in diesem Fall ist zu
berücksichtigen, daß dieses die Rückförderung der einen Lochkarte nicht behindern darf. Aus diesem Grund wird bevorzugt (man
könnte auch die betreffende Entwicklungseinrichtung etwas tiefer
anordnen) das Lochkartenmagazin etwas höher als die Durchlaufebene für die Lochkarten im Kamerakasten angeordnet, so daß die belichtete Lochkarte aus der Belichtungsstation, in der gleichen Ebene bleibend, in die vor dieser angeordneten zweite Entwicklungsstation gefördert werden kann.

Es gibt aber in Rücksicht auf die Links- und Rechtsausförderung der Lochkarten aus der Belichtungsstation noch eine weitere Anordnungsmöglichkeit für das Lochkartenmagazin verbunden mit einer Transportwegverkürzung, nämlich derart, daß das Magazin außerhalb der Durchlaufbahn vor der Belichtungsstation angeordnet wird, d.h., in diesem Fall werden die Lochkarten quer zur Durchlaufbahn in die Belichtungsstation eingefördert und dann aus dieser wechselweise nach rechts und links in die dort beidseitig neben der Belichtungsstation angeordneten Entwicklungseinrichtungen transportiert.

Abgesehen von der Geschwindigkeitserhöhung bezüglich des Durchsatzes, ist das Ganze natürlich auch noch damit verbunden, daß die Gewichtsverteilung in bezug auf den Kamerakasten günstiger ist.

Da die Filmabschnitte in den Lochkarten in Bezug auf deren Längserstreckung exzentrisch angeordnet sind, ist dies in Bezug auf die Einförderungsrichtung der Lochkarten in die Belichtungsstation und die wechselweise Ausförderung nach rechts und links und die Anordnung der beiden rechts und links angeordneten Entwicklungseinrichtungen zu berücksichtigen, was durch eine entsprechend versetzte Anordnung der Entwicklungseinrichtungen erfolgt.

In Verbindung mit der erwähnten Möglichkeit der Anordnung des Magazins außerhalb der Durchlaufbahn vor der Belichtungsstation, wäre es sogar möglich, das Magazin, sich in Längsrichtung der Lochkarten erstreckend, vor der Belichtungsstation anzuordnen, so daß die Lochkarten mit ihrem Filmabschnitt voran senkrecht in die Belichtungsstation einzufördern und in dieser Stellung nach rechts und links auszufördern, wobei die beiden Entwicklungstationen in gleicher Distanz neben der Belichtungsstation angeordnet sind. Hierbei ergibt sich ebenfalls eine Transportwegverkürzung, und der ganze Kamerakasten wird in seiner Gesamtlänge noch kompakter.

Der erfindungsgemäße Kamerakasten wird nachfolgend anhand der zeichnerischen Darstellung von Ausführungsbeispielen näher erläutert.

Es zeigen schematisch

Fig. 1 in Schnitt und Seitenansicht den Kamerakasten;

Fig. 2 ein Zeitvergleichsschaubild für die Durchführung von bspw. sechs Aufnahmen;

Fig. 3 in Schnitt und Sesitenansicht den Kamerakasten;

Fig. 4 eine Draufsicht auf eine andere Ausführungsform
    des Kamerakastens;

Fig. 5 in Draufsicht eine weitere Ausführungsform des
    Kamerakastens und

Fig. 6 in Ansicht die Mikrofilmkamera mit dem Kamerakasten.

Zunächst wird auf die Fig. 1,2 Bezug genommen. Das Gehäuse des
Kamerakastens ist mit 1 bezeichnet. Die Lochkarten gelangen aus
dem Vorratsmagazin 2 unter die Belichtungsstation 3, in der die
jeweilige Belichtung erfolgt. Die ganze Durchlaufstrecke bis zum
Austrittsschlitz 7 am anderen Ende des Kamerakastens ist mit schematisch
dargestellten Transportelementen strichpunktiert angedeutet.

Die belichtete Lochkarte gelangt nun über die erste Entwicklungsstation A hinweg zur zweiten Entwicklungsstation B. Während dort
bereits die Entwicklung läuft, wird auch die Station A beschickt.

Die fertig entwickelte Aufnahme bzw. Lochkarte in Station B
wird dann ausgestoßen und gelangt in die Trocknungsstation 6,
wo mit bekannten Einrichtungen zusätzlich auch eine Bildkontrolle bspw. mittels eines Monitors 8 erfolgen kann.

Die in der ersten Station A entwickelte Karte folgt nach, und
der ganze Vorgang beginnt von neuem. Die zeitliche Abfolge

0104427

der Entwicklungsphase in den Stationen A und B ist im Oberteil der Fig. 2 für sechs Aufnahmen verdeutlicht, wobei im unteren Teil die Abfolge von Entwicklungsphasen in nur einer Entwicklungseinrichtung 4 in herkömmlich alleiniger Anordnung dargestellt ist. Der Zeitgewinn von ca. 3o sec. bei sechs Aufnahmen ergibt sich aus der möglich gewordenen Überlappung von zwei Entwicklungsvorgängen.

Zweckmäßig ist die zweite Entwicklungseinrichtung 5 (B) in einem separaten und ansetzbaren Genäuse 1´ angeordnet, das zudem vorteilhaft in Größe und Anschlußabmessungen an das Gehäuse 1" für die Trocknungsstation 6 angepaßt ist, wodurch ein solcher Kamerakasten bausteinartig ergänzt werden kann. bzw. ein separates Gehäuse 1´ zwischen Hauptgehäuse mit Entwicklungseinrichtung 4 und Gehäuse 1" eingebaut werden kann, wenn eine höhere Durchsatzgeschwindigkeit gewünscht wird.

Für den Hersteller ist also bei dieser bevorzugten Ausführungsform der Herstellungsaufwand relativ gering, da für das Gehäuse 1´ der zusätzlichen Entwicklungseinrichtung 5 auf bereits vorhandene Gehäuse 1" für die Trocknungsstation 6 zurückgegriffen werden kann, die bisher schon als separat anzusetzende Gehäuse ausgebildet waren.

Nunmehr wird auf die Fig. 3 bis 5 Bezug genommen unter Verwendung entsprechender Bezugszeichen.

Die Lochkarten gelangen aus dem Vorratsmagazin 2 des Kamerakastens 1 unter die Beleichtungsstation 3, in der die jeweilige Belichtung erfolgt. Die ganze Durchlaufbahn lo bis zu den Austrittsschlitzen 7 an beiden Enden des Kamerakastens 1 ist strichpunktiert angedeutet.

Die nebeneinander in der Belichtungsstation 3 belichteten Lochkarten gelangen abwechselnd, von den bzgl. ihrer Drehrichtung wechselnd gesteuerten Transportelementen 9 bewirkt, zu den Entwicklungsstationen 5,4.

Die fertig entwickelten und weitgehend getrockneten Aufnahmen bzw. Lochkarten werden dann ausgestoßen und gelangen in die beidseitig angeordneten Nachtrocknungsstationen 6, wo auch hier mit bekannten Einrichtungen zusätzlich auch eine Bildkontrolle  bspw. mittels Monitoren 8 erfolgen kann. Aus den Nachtrocknungsstationen 6 werden dann die fertigen Lochkarten in die seitlichen Sammler 14 ausgeworfen. Ein solcher Sammler 14 ist natürlich auch am Kamerakasten 1 in Fig. 1 vorhanden, dort nur nicht dargestellt.

Wie aus Fig. 3 erkennbar, sind die beiden Entwicklungsstationen 4,5 in Rücksicht auf den exzentrischen Versatz der Filmabschnitte 11 in den Lochkarten auch hier entsprechend versetzt in Bezug auf die Entwicklungsstation 3 im Kamerakasten 1 angeordnet.

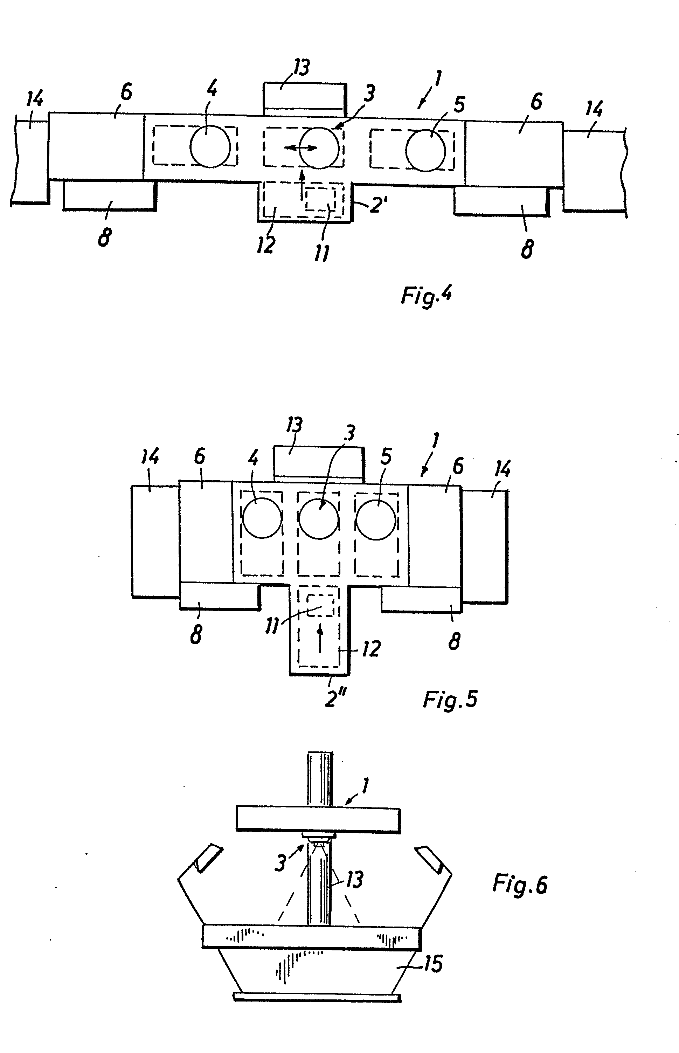

Gemäß Fig. 4 kann das Magazin 2´ auch anders angeordnet werden, nämlich, wie dargestellt, außerhalb der eigentlichen Durchlaufbahn lp vor der Belichtungsstation 3, d.h., mit geeignet angeordneten Transportelementen werden die Lochkarten 12 quer zu ihrer Längserstreckung in die Belichtungsstation 3 eingeschoben.

Die Zuförderung der "Rohkarten" kann aber auch aus einem in Längserstreckung senkrecht zur Durchlaufbahn lo angeordnetem Magazin 2" im Sinne der Fig. 5 erfolgen, wobei die beiden Entwicklungsstationen 4,5 ohne Distanzunterschied der Belichtungsstation 3 zugeordnet sind.

Im eigentlichen Kamerakasten 1, der gemäß Fig. 6 bei allen Ausführungsformen übrigens an einer senkrechten Säule 13 einstellbar üter einen Vorlagentisch 15 geführt ist, erfolgt die wechselweise Förderung der Lochkarten beim Ausführungsbeispiel nach Fig. 5 nach rechts und links quer zu ihrer Längserstreckung, was, wie im Vergleich zu Fig. 3 und 4 erkennbar, mit einer Längsreduzierung des Kamerakastens um etwa eine ganze Lochkartenlänge verbunden ist und außerdem mit einer absolut gleichmäßigen Gewichtsverteilung.

Es ist darauf hinzuweisen, daß bei allen Ausführungsbeispielen die Bedienungsperson nicht zwangsläufig der erreichbaren hohen Durchlaufgeschwindigkeit unterworfen ist, sondern den oben beschriebenen Ablauf im Bedarfsfall bspw. per Druckknopfbetätigung beherrschen kann.

Grundsätzlich sind die Wartezeiten in der Lochkarteneingabefolge praktisch auf etwa eine Entwicklungszeitdauer in einer Entwicklungseinrichtung reduziert, da nach deren Räumung

sofort die nähste belichtete Lochkarte nachgeschoben werden kann und die Folgekarte in die Belichtungsstation und von da in die Entwicklungsstation auf der anderen Seite usw.

Patentansprüche:

1. Kamerakasten für Mikrofilmaufnahme-Kameras zur Verarbeitung von Filmlochkarten, bestehend aus einem Gehäuse mit Transportelementen und mit darin angeordnetem Magazin, Belichtungs-, Entwicklungs- und Trocknungseinrichtung, d a d u r c h   g e k e n n z e i c h n e t , daß im Gehäuse (1) der nach der Belichtungsstation (3) angeordneten ersten Entwicklungseinrichtung (4) eine weitere in Größe und Wirkungsart entsprechende zweite Entwicklungseinrichtung (5) vor der Trockenstation (6) zugeordnet ist.

2. Kamerakasten nach Anspruch 1, d a d u r c h   g e k e n n - z e i c h n e t , daß die zugeordnete zweite Entwicklungseinrichtung (5) in bezug auf die Film- bzw. Lochkartendurchlaufstrecke hinter der ersten Entwicklungseinrichtung (4) angeordnet ist.

3. Kamerakasten nach Anspruch 1 und/oder 2, d a d u r c h   g e k e n n z e   i c h n e t , daß die zugeordnete zweite Entwicklungseinrichtung (5) in einem separaten, an das Gehäuse (1) des Kamerakasten anschließbaren Gehäuse (1´) angeordnet ist.

4. Kamerakasten nach Anspruch 3, d a d u r c h g e k e n n -
   z e i c h n e t , daß das separate Gehäuse (1´) bezüglich
   seiner Größe und Anschlußabmessungen dem Gehäuse (1" ) der
   Trocknungsstation (6) entsprechend ausgebildet ist.

5. Kamerakasten für Mikrofilmaufnahme-Kameras zur Verarbeitung von Filmlochkarten, bestehend aus einem Gehäuse mit
   Transportelementen und mit darin angeordnetem Magazin, Belich-
   tungs-, Entwicklungs- und Trocknungseinrichtung, d a d u r c h
   g e k e n n z e i c h n e t , daß im das Lochkartenmagazin (2)
   enthaltenden Gehäuse (1) der nach der Belichtungsstation (3)
   angeordneten ersten Entwicklungseinrichtung (4) eine weitere,
   in Größe und Wirkungsart entsprechende zweite Entwicklungseinrichtung (5) auf der anderen Seite der Belichtungsstation (3)
   zugeordnet und daß die Transportelemente (9) im Bereich der Belichtungsstation (3) jeweils in entgegengesetzter Richtung wirkend, umsteuerbar ausgebildet sind.

6. Kamerakasten nach Anspruch 5, d a d u r c h g e k e n n -
   z e i c h n e t , daß das Lochkartenmagazin (2) etwas erhöht
   über der Durchlaufbahn (1o) der Lochkarten angeordnet ist.

7. Kamerakasten nach Anspruch 5, d a d u r c h g e k e n n -
   z e i c h n e t , daß das Lochkartenmagazin (2´) außerhalb

der Durchlaufbahn (1o) vor derBelichtungsstation (3) angeordnet ist.

8. Kamerakasten nach jedem der Ansprüche 5 bis 7, d a d u r c h   g e k e n n z e i c h n e t , daß die beiden Entwicklungs- einrichtungen (4,5) der exzentrischen Anordnung des Filmabschnittes (11) in der Lochkarte (12) entsprechend versetzt im Kamerakasten (1) angeordnet sind.

0104427

Fig. 1

Fig. 2

Fig. 3

0104427

Fig.4

Fig.5

Fig.6